# EUROPÄISCHE PATENTSCHRIFT

(11) **EP 3 115 145 B1**
(45) Veröffentlichungstag und Bekanntmachung des Hinweises auf die Patenterteilung: **09.01.2019**
(21) Anmeldenummer: 15175826.5
(22) Anmeldetag: 08.07.2015
(51) Int. Cl.: B23K 11/31, B23K 26/00, H01B 7/08, H01B 9/00

(54) **WIDERSTANDSSCHWEISSVORRICHTUNG MIT EINEN RECHTECKIGEN QUERSCHNITT AUFWEISENDEN STROMLEITUNGEN**
RESISTANCE WELDING DEVICE WITH CURRENT CABLES HAVING A RECTANGULAR SECTION
DISPOSITIF DE SOUDAGE PAR RESISTANCE AVEC DES CABLES DE COURANT DE SECTION RECTANGULAIRE

(43) Veröffentlichungstag der Anmeldung: 11.01.2017
(73) Patentinhaber: DALEX-Schweißmaschinen GmbH & Co. KG, 57537 Wissen/Sieg (DE)
(72) Erfinder: BRAST, Gerd, 56459 Guckheim (DE)
(74) Vertreter: Rausch Wanischeck-Bergmann Brinkmann

(56) Entgegenhaltungen:
- CH-A5- 598 677
- DE-A1-102006 005 920
- FR-A- 1 285 834
- JP-A- 2001 508 585
- US-A1- 2004 134 888
- US-B2- 7 449 639

## Beschreibung

Die Erfindung betrifft eine Widerstandsschweißvorrichtung gemäß dem Oberbegriff des Anspruchs 1 (siehe, z.B., DE 10 2006 005 920 A1).

Widerstandsschweißvorrichtungen sind an sich aus dem Stand bekannt. Es handelt sich hierbei um Vorrichtungen zum Widerstandsschweißen. Beim Widerstandsschweißen wird die zum Schweißen erforderliche Wärme durch den Stromfluss über den elektrischen Widerstand erzeugt. Geschweißt wird mit oder ohne Kraft und meist ohne Schweißzusatz. Widerstandsschweißen ist genormt in der DIN 1910 sowie in der EN ISO 4063.

Widerstandsschweißen kann sowohl mit Gleichstrom als auch mit Wechselstrom durchgeführt werden. Hierbei werden vergleichsweise hohe Stromstärken in vergleichsweise kurzer Zeit eingesetzt, beispielsweise 100 kA in weniger als einer Sekunde. Wird das Widerstandsschweißen mit Wechselstrom durchgeführt, beträgt die Frequenz des Stroms beispielsweise 50 Hz.

Die Schweißleistung ist hierbei maßgeblich durch die Induktivität der Stromleitungen begrenzt. Außerdem ergeben sich aufgrund der Induktivität und der hohen Stromstärken erhebliche Magnetfelder. Es wäre aus Sicht der Arbeitssicherheit wünschenswert, die Intensität der Magnetfelder zu reduzieren.

Ausgehend von diesem Stand der Technik ist es daher die **Aufgabe** der Erfindung, bei zugleich verbesserter Schweißleistung die Ausbildung von Magnetfeldern zu reduzieren.

Die Widerstandsschweißvorrichtung gemäß der Erfindung ist im Anspruch 1 definiert.

Gemäß der Erfindung besteht darin, zumindest zwei gegenpolig angeschlossene Stromleitungen von der Schweißstromquelle zu den Schweißelektroden in einem Verbund zu führen.

Vorzugsweise erfolgt eine Verzweigung der beiden Stromleitungen zu den beiden Schweißelektroden erst unmittelbar im Bereich der Anschlüsse der Stromleitungen an die Schweißelektroden. Sofern Strom fließt, fließt er in den im Verbund angeordneten Stromleitungen in entgegengesetzte Richtungen. Die daraus resultierenden, einander entgegen gerichteten Magnetfelder der beiden Stromleitungen neutralisieren sich zumindest teilweise. Somit kann die Entstehung von Magnetfeldern beim Widerstandsschweißen erheblich reduziert werden. Zugleich führt diese gegenseitige Neutralisation überraschenderweise auch dazu, dass die Induktivität der beiden im Verbund geführten Stromleitungen verringert wird. Dadurch wird der Zusatzeffekt erreicht, dass sich ein gewünschter Schweißstrom an einer Schweißstelle schneller aufbaut und somit die Schweißzeit bei gleicher Schweißleistung verkürzt werden kann. Dies führt in der Folge wiederum zu einer verringerten Erwärmung der miteinander zu verschweißenden Bauteile im Bereich um die Schweißstelle herum. Es kann somit insgesamt eine erheblich verbesserte Schweißqualität erreicht werden, bei zugleich verringerter Erzeugung von Magnetfeldern.

Eine Schweißstelle ist ein von zwei gegenpoligen Schweißelektroden gebildeter Bereich, in welchem bei entsprechend hoher Schweißspannung ein Strom von der einen Schweißelektrode zur anderen Schweißelektrode fließt, und hierbei insbesondere durch zwei zwischen den Schweißelektroden angeordnete und miteinander zu verschweißende Bauteile. Schweißstellen können beispielsweise durch ein Maul einer Schweißzange bereitgestellt sein, wobei beispielsweise handbetätigte Schweißzangen zum Einsatz kommen können. Schweißstellen können aber auch durch vollautomatische Schweißmaschinen bereitgestellt sein.

Erfindungsgemäß verzweigen sich die beiden im Verbund geführten Stromleitungen erst im Bereich der von den Schweißelektroden gebildeten Schweißstellen. Dies steht zunächst einmal im Unterschied zu aus dem Stand der Technik bekannten Schweißvorrichtungen, bei denen die Stromleitungen an den beiden Polen der Schweißstromquelle bereits baulich voneinander getrennt sind und in der Folge baulich voneinander getrennt zur Schweißstelle geführt werden. Darüber hinaus meint dieses Merkmal insbesondere, dass die beiden Stromleitungen über eine Länge von 90 %, insbesondere 95 %, besonders bevorzugt 98 % ihrer Gesamtlänge im Verbund miteinander geführt sind. Vorzugsweise erfolgt eine Verzweigung der beiden Stromleitungen erst unmittelbar im Bereich der Anschlüsse der Schweißelektroden. Dies kann bedeuten, dass die Stromleitungen in etwa einander entgegengerichtet verzweigt werden und unmittelbar an die Schweißelektroden angeschlossen sind.

Gemäß der Erfindung sind die Stromleitungen im Querschnitt rechteckig ausgebildet. Die Stromleitungen können zumindest bereichsweise als Stromschienen oder Strombänder ausgebildet sein. Versuche der Anmelderin haben gezeigt, dass im Querschnitt rechteckige Stromteitungen besonders geeignet sind, die eingangs formulierte Aufgabe zu lösen. Zunächst einmal hat sich herausgestellt, dass im Querschnitt rechteckige Stromleitungen eine wesentlich homogenere Stromdichte ermöglichen als Rundleiter. Insbesondere werden bei den im Querschnitt rechteckigen Stromleitungen geringere Ausprägungen des sogenannten Skin-Effekts und des Proximity-Effekts beobachtet. Beim Skin-Effekt gibt die sogenannte Skin-Eindringtiefe die Schichtdicke an, bei der die Stromdichte vom Außenrand eines Leiters zum Innenrand auf 1/e gesunken ist. Beim Proximity-Effekt kommt es darauf an, dass sich die benachbarten, entgegengesetzten Ströme zweier gegenpoligen Leiter so beeinflussen, dass die Stromdichte zum jeweils anderen Leiter hin gerichtet größer wird. Die Vorteile der Erfindung im Hinblick auf diese beiden Effekte hängen vermutlich jedoch nicht nur mit dem Leiterquerschnitt als solchem zusammen, sondern auch mit der Tatsache, dass sich im Querschnitt rechteckige Stromleitungen besonders gut zu einem engen, insbesondere luftspaltlosen Verbund anordnen lassen. Mit dem rechteckigen Querschnitt lässt sich vor allem besonders einfach ein Verbund aus einer Vielzahl, insbesondere gegenpoliger Stromleitungen erzeugen. Bezogen auf die gesamte Querschnittsfläche lassen sich im Querschnitt rechteckige Leiter enger packen als im Querschnitt runde Leiter. Versuche der Anmelderin mit beispielsweise 36 im Verbund angeordneten im Querschnitt rechteckigen Stromleitungen haben eine ausgesprochen geringe Induktivität der Gesamtanordnung bei zugleich vergleichsweise geringen äußeren Magnetfeldern gezeigt.

Die Stromleitungen sind vorzugsweise alle luftspaltlos unter Zwischenordnung eines Isolators miteinander verbunden. Als Isolator kann beispielsweise Nomex-Papier aus dem Hause Dupont zum Einsatz kommen. Vorzugsweise ist die Dicke der Stromleitungen größer als die Dicke der Isolatoren.

Eine vorteilhafte Variante der Erfindung sieht vor, anstelle ausschließlich zweier Schweißelektroden zumindest vier Schweißelektroden vorzusehen, wobei jeweils zwei der Schweißelektroden eine Schweißstelle bilden. Jeweils zwei gegenpolig angeschlossene Stromleitungen werden nun in einem Verbund geführt und verzweigen sich erst kurz vor entsprechenden Anschlüssen an den Schweißelektroden, nämlich im Bereich der von den Schweißelektroden gebildeten Schweißstellen.

Somit können die Stromleitungen besonders lange in einem Verbund miteinander geführt werden. Die zuvor beschriebenen Effekte treten in noch stärkerem Maße auf. Die aus einem Stromfluss resultierenden, einander entgegen gerichteten Magnetfelder der Stromleitungen neutralisieren sich besonders deutlich. Somit kann die Entstehung von Magnetfeldern beim Widerstandsschweißen noch weiter reduziert werden. Auch die Induktivität der im Verbund geführten Stromleitungen kann nochmals verringert werden.

Zwei Stromleitungen sind gegenpolig angeschlossen, wenn eine der Stromleitungen beispielsweise an einen positiven Pol und die andere Stromleitung an einen negativen Pol einer Stromquelle angeschlossen ist. Wird die Widerstandsschweißvorrichtung betrieben, fließt der Strom durch diese beiden Stromleitungen genau entgegengesetzt.

Ein besonders langer und enger Verbund jeweils zweier Stromleitungen miteinander wird auch dadurch erreicht, dass zumindest auf einer Seite einer Schweißstelle nicht nur eine Schweißelektrode, sondern zwei Schweißelektroden vorgesehen sind. Diese beiden Schweißelektroden sind vergleichsweise nah beieinander angeordnet. Dadurch ist der Weg der Stromleitungen nach einem Verzweigungspunkt des Verbunds vergleichsweise kurz. Dies gilt auch im Hinblick auf eine Schweißstelle, welche aus lediglich zwei Schweißelektroden gebildet ist. Bei dieser kann ein sogenannter Kurzschlussteller auf der den Schweißelektroden gegenüberliegenden Seite der Schweißstelle eingesetzt werden. Der Schweißstrom fließt dann von der einen Schweißelektrode durch die zu verschweißenden Bauteile, von dort in den Kurzschlussteller, durch den Kurzschlussteller und anschließend erneut durch die zu verschweißenden Bauteile in Richtung der anderen Schweißelektrode.

Erfindungsgemäß kann ein erster Verbund aus zwei gegenpolig angeschlossenen Stromleitungen zu den beiden Elektroden auf der einen Seite der Schweißstelle und ein zweiter Verbund aus den anderen beiden gegenpolig angeschlossenen Stromleitungen zu den Schweißelektroden auf der anderen Seite der Schweißstelle geführt werden.

Vorzugsweise sind jeweils zwei benachbarte, auf der gleichen Seite einer Schweißstelle angeordnete Schweißelektroden voneinander beabstandet. Der Abstand ist vorzugsweise größer als die gesamte Dicke der miteinander zu verschweißenden Bauteile. Dadurch wird sichergestellt, dass der Schweißstrom tatsächlich durch die Bauteile und nicht nur an der Oberfläche von einer Schweißelektrode zur benachbarten Schweißelektrode fließt.

Vorzugsweise sind jeweils zwei benachbarte, auf der gleichen Seite einer Schweißstelle angeordnete Schweißelektroden gegenpolig an die Stromquellen angeschlossen. Hierbei ist vorzugsweise die eine Schweißelektrode an den einen Pol der ersten Stromquelle angeschlossen und die andere Schweißelektrode an den jeweils gegenpoligen Pol der jeweils anderen Stromquelle angeschlossen. Mit einem entsprechenden Anschluss der Schweißelektroden auf der jeweils anderen Seite der Schweißstelle können somit zwei parallel gerichtete Stromflüsse durch die zu verschweißenden Bauteile erreicht werden.

Gemäß einer vorteilhaften Weiterbildung der Erfindung sind alle Stromleitungen nach Anschlusspolarität abwechselnd in einem Verbund von den Schweißstromquellen zu den Schweißelektroden geführt. Es handelt sich somit um einen Verbund von insbesondere einem Vielfachen von zwei Stromleitungen, beispielsweise 6, 8, 10 oder noch mehr Stromleitungen, wodurch der Skin-Effekt und der Proximity-Effekt verbessert wird, und zwar um so mehr, je mehr Schachtelungen vorgesehen sind. Versuche der Anmelderin haben gezeigt, dass die zuvor beschriebenen Neutralisierungseffekte in einem solchen mehrteiligen Verbund noch deutlichere Auswirkungen zeigen und somit die Schweißleistung noch weiter verbessert werden kann. Insbesondere kann auch eine Vielzahl von Schweißelektrodenpaaren, beispielsweise 3, 4, 5 oder mehr Schweißelektrodenpaare vorgesehen sein. Es lässt sich somit in ein und demselben Arbeitsschritt eine Art linienförmige Schweißnaht ausbilden.

Die Anordnung der gegenpolig angeschlossenen Stromleitungen in einem Verbund kann insbesondere dadurch realisiert werden, dass die Stromleitungen durch ein Verbindungsmittel nah aneinander gehalten sind, beispielsweise durch ein Klebemittel, eine Einfassung wie einen Schrumpfschlauch und/oder dergleichen. Vorzugsweise ist vorgesehen, dass jeweils zwei beziehungsweise eine Vielzahl von gegenpoligen Stromleitungen in einem Verbund luftspaltlos unter Zwischenordnung eines Isolators geführt sind. Somit kann die Erzeugung von Magnetfeldern weitestmöglich neutralisiert werden und die Induktivität der Anordnung weitestgehend reduziert werden.

Die Schweißstromquelle kann eine Gleichstromquelle oder eine Wechselstromquelle sein. Im Falle eine Wechselstromquelle ist sie vorzugsweise durch einen Transformator gebildet, welcher wiederum durch eine andere Stromquelle entsprechend angeregt wird. Der Transformator weist eine Primärwicklung und eine Sekundärwicklung auf. Vorzugsweise ist jede Schweißstromquelle jeweils durch eine Sekundärspule eines Transformators gebildet. Hierbei kann vorgesehen sein, dass alle Sekundärspulen eine gemeinsame Primärspule aufweisen. Es kann aber auch vorgesehen sein, dass jede Sekundärspule eine eigene Primärspule aufweist.

Gemäß einer vorteilhaften Weiterbildung der Erfindung stellen die Schweißstromquellen Wechselstrom mit einer Frequenz von 1000 Hz, vorzugsweise mehr als 1000 Hz. Es handelt sich hierbei um eine ganz erhebliche Stromfrequenz, welche bislang praktisch nicht zufriedenstellen implementiert werden konnte. Erst die Erfindung zeigt, wie eine derartige Stromfrequenz in ausführbarer Weise erreicht werden kann. Dies funktioniert gemäß der Erfindung nämlich erst dadurch, dass die Induktivität gemäß den vorstehenden Ausführungen durch den Verbund mehrerer Stromleitungen miteinander erheblich reduziert werden kann.

Gemäß einer vorteilhaften Weiterbildung der Erfindung sind jeweils Schweißelektroden gleicher Anschlusspolarität elektrisch miteinander verbunden. Versuche der Anmelderin haben gezeigt, dass eine derartige elektrische Kopplung zu einer weiteren Reduktion der Induktivitäten sowie der im Betrieb auftretenden Magnetfelder führt.

Vorzugsweise sind die Schweißstromquellen synchronisiert betrieben. Dies meint, dass die verschiedenen Schweißstellen, das heißt alle miteinander zusammenwirkenden Schweißelektrodenpaare immer exakt gleichzeitig betrieben werden.

Gemäß einer vorteilhaften Weiterbildung der Erfindung können die Stromstärken der Schweißelektrodenpaare gleich ausgebildet sein. Es können jedoch auch unterschiedliche Stromstärken eingesetzt werden.

Vorteile und Merkmale der Erfindung ergeben sich auch anhand der nachfolgenden Figurenbeschreibung. Es zeigen:
- Fig. 1: eine aus dem Stand der Technik bekannte Widerstandsschweißvorrichtung;
- Fig. 2: ein erstes Ausführungsbeispiel einer erfindungsgemäßen Widerstandsschweißvorrichtung ,
- Fig. 3: ein zweites Ausführungsbeispiel einer erfindungsgemäßen Widerstandsschweißvorrichtung;
- Fig. 4: schematisch eine Variante einer Widerstandsschweißvorrichtung mit einer ersten Art Schweißstromquelle;
- Fig. 5: schematisch eine weitere Variante mit einer zweiten Art Schweißstromquelle;
- Fig. 6: ein möglicher Verbund von Stromleitungen für eine erfindungsgemäße Widerstandsschweißvorrichtung; und
- Fig. 7: ein weiteres Ausführungsbeispiel einer erfindungsgemäßen Widerstandsschweißvorrichtung

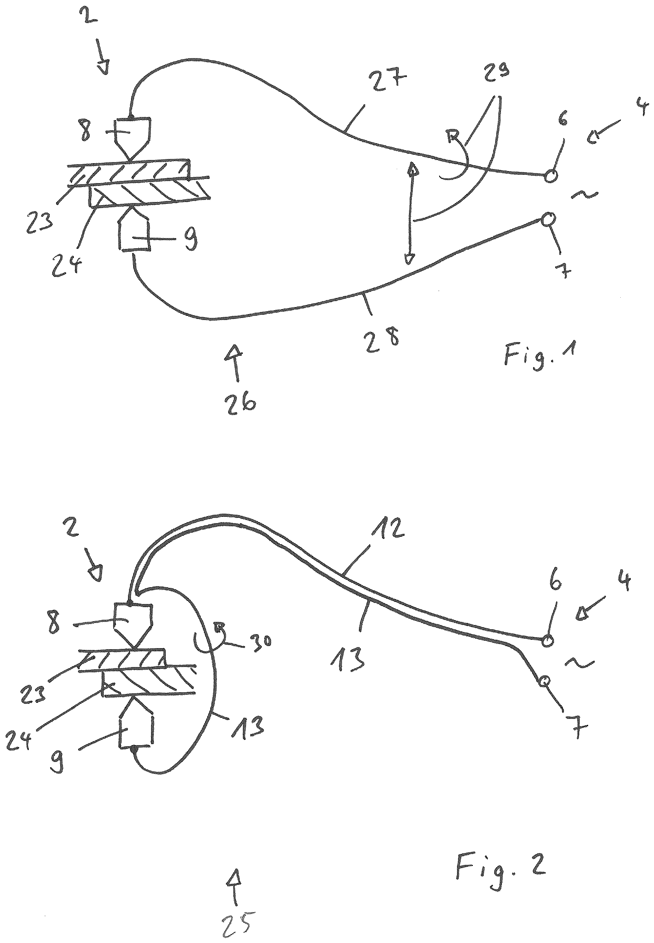

Figur 1 zeigt eine Widerstandsschweißvorrichtung 26, wie sie aus dem Stand der Technik bekannt ist. Diese umfasst eine Schweißstelle, welche durch ein Schweißelektrodenpaar 2 gebildet ist. Das Schweißelektrodenpaar 2 umfasst eine erste Schweißelektrode 8 und eine zweite Schweißelektrode 9. Vorzugsweise sind die beiden Schweißelektroden 8, 9 relativ zueinander verschwenkbar, beispielsweise manuell von Hand. Es könnte aber auch die zweite Schweißelektrode 9 ortsfest angeordnet und nur die zweite Schweißelektrode 8 bewegbar sein, beispielsweise bei einer Schweißmaschine.

Zwei miteinander zu verschweißende Bauteile 23, 24 werden in ein Aufnahmemaul der Schweißstelle eingeführt. Anschließend werden die beiden Schweißelektroden 8, 9 auf den Oberflächen der Bauteile 3, 4 angeordnet. Jede Schweißelektrode 8, 9 ist mittels einer Stromleitung 27, 28 mit einer Schweißstromquelle 4, nämlich jeweils einem Pol 6, 7 der Schweißstromquelle 4 elektrisch verbunden. Liegt nun an der Schweißstromquelle 4 eine Spannung an, fließt ein Strom durch die Stromleitungen 27, 28, die Schweißelektroden 8, 9 sowie die Bauteile 23, 24. Die Bauteile 23, 24 stellen dabei einen erheblichen Widerstand dar, so dass dort infolge des Stromflusses eine entsprechende Erwärmung auftritt. Dadurch wird das Material der Bauteile 23, 24 teilweise aufgeschmolzen und es kommt zu einer stoffschlüssigen Verbindung.

Durch diverse physikalische Effekte kommt es infolge des Stromflusses zur Ausbildung von Magnetfeldern 29. Aufgrund der vergleichsweise hohen Stromstärken, beispielsweise 1 kA oder 10 kA, handelt es sich hierbei um vergleichsweise starke Magnetfelder 29, welche von Bedienern teilweise als unangenehm empfunden werden.

Figur 2 zeigt nun eine erste Variante einer Widerstandsschweißvorrichtung 25 gemäß der Erfindung. Diese ist hinsichtlich der Schweißstelle als solcher ähnlich aufgebaut wie die zuvor beschriebene Widerstandsschweißvorrichtung 26. Allerdings handelt es sich bei zwei Stromleitungen 12, 13 um im Querschnitt rechteckige Leiter, welche darüber hinaus in einem Verbund miteinander geführt sind, und zwar vorzugsweise über eine vergleichsweise lange Distanz. Die Stromleitungen 12, 13 sind an die Pole 6, 7 der Schweißstromquelle 4 angeschlossen. Dort werden sie direkt zusammengeführt. Sie sind vorzugsweise in einem Verbund luftspaltlos unter Zwischenordnung eines Isolators geführt. Im Bereich des Schweißelektrodenpaares 2 verzweigen sich die Stromleitungen 12, 13. Die Stromleitung 12 ist elektrisch mit der Schweißelektrode 8 verbunden. Die Stromleitung 13 hingegen verzweigt sich im Bereich des Anschlusses der Stromleitung 12 an die Schweißelektrode 8 und wird zur Schweißelektrode 9 geführt. Dies bedeutet, dass die beiden Stromleitungen 12, 13 fast über die gesamte Länge der Stromleitung 12 im Verbund miteinander angeordnet sind, vorzugsweise über 95 %, besonders bevorzugt 98 % der Länge der Stromleitung 12. Ein besonders guter Verbund ergibt sich also einerseits durch die Länge der Führung der Stromleitungen 12, 13 im Verbund, andererseits durch die rechteckige Ausgestaltung der Querschnitte der Stromleitungen 12, 13. Solange die beiden Stromleitungen 12, 13 in diesem Verbund angeordnet sind, neutralisieren sich infolge des Stromflusses erzeugte Magnetfelder erheblich. Dadurch reduziert sich auch die relevante Induktivität.

Eine Ausbildung von Magnetfeldern erfolgt merklich überhaupt nur in dem Bereich, in welchen die Stromleitung 13 von der Schweißelektrode 8 zur Schweißelektrode 9 geführt wird. In Bezug auf eventuell im Einsatzgebiet einzuhaltende Grenzwerte sind die hierbei auftretenden Magnetfelder 30 vernachlässigbar gering.

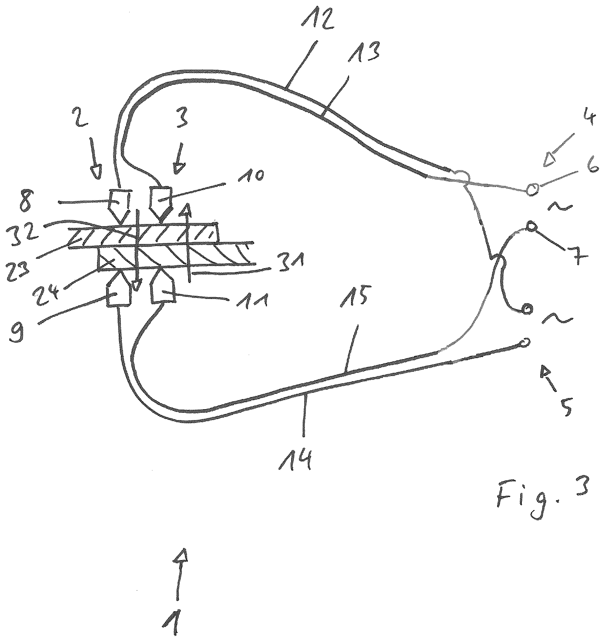

Figur 3 zeigt nun eine zweite Ausführungsform einer erfindungsgemäßen Widerstandsschweißvorrichtung. Diese verfügt über zwei Schweißelektrodenpaare 2, 3, wobei auch das zweite Schweißelektrodenpaar 3 über zwei Schweißelektroden 10, 11 verfügt. Jeweils ein Schweißelektrodenpaar 2, 3 ist an eine Schweißstromquelle 4, 5 elektrisch angeschlossen. Hierbei sind jeweils auf einer Seite der Schweißstelle angeordnete Schweißelektroden gegenpolig angeschlossen. Somit ist beispielsweise die Schweißelektrode 8 positiv und die Schweißelektrode 10 negativ gepolt. Die jeweils gegenüberliegende Elektrode ist ebenfalls entsprechend gegensinnig gepolt, was aus dem entsprechenden Anschluss an den jeweils anderen Pol der Schweißstromquelle 4, 5 resultiert. Im Betrieb der Widerstandsschweißvorrichtung 1 ergeben sich dadurch einander entgegengesetzte Stromflüsse 31, 32 durch die miteinander zu verschweißenden Bauteile 23, 24. Diese Stromflüsse 31, 32 können im Wesentlichen parallel zueinander verlaufen.

Bemerkenswert ist an dieser Ausgestaltung, dass die Stromleitungen 12, 13 sowie die Stromleitungen 14, 15 jeweils in einem Verbund miteinander geführt sind und zwar bis unmittelbar zum Anschluss an die jeweiligen Schweißelektroden 8, 9, 10, 11. Im Unterschied zur Ausführungsform gemäß Figur 2 kann also die Führung einer einzelnen Stromleitung 13 von der einen Elektrode 8 auf der einen Seite der Schweißstelle an die andere Elektrode 9 auf der anderen Seite der Schweißstelle zusätzlich entfallen. Dadurch kann der Erzeugung von als störend empfundenen Magnetfeldern noch weiter entgegengewirkt werden und es stellt sich zudem eine weiter verringerte Induktivität der Leitungen ein.

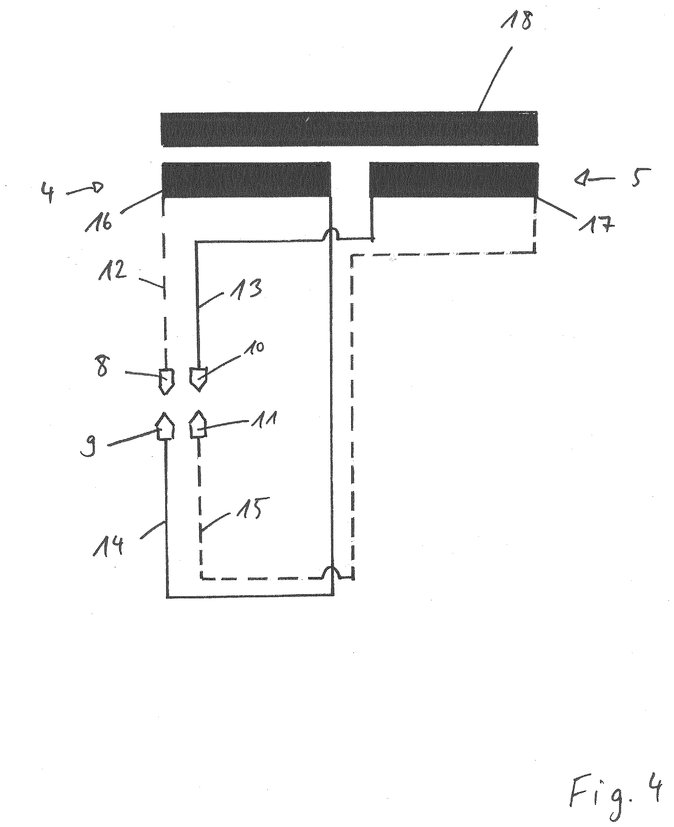

Figur 4 zeigt nun basierend auf dem Ausführungsbeispiel gemäß Figur 3 eine mögliche Ausbildung der Schweißstromquellen 4, 5. Vorliegend handelt es sich hierbei um Transformatoren, wobei jeder Transformator über eine Sekundärspule 16 beziehungsweise 17 sowie beide Transformatoren über eine gemeinsame Primärspule 18 verfügen. Die Primärspule 18 wird wiederum von einer nicht weiter dargestellten Stromquelle angeregt.

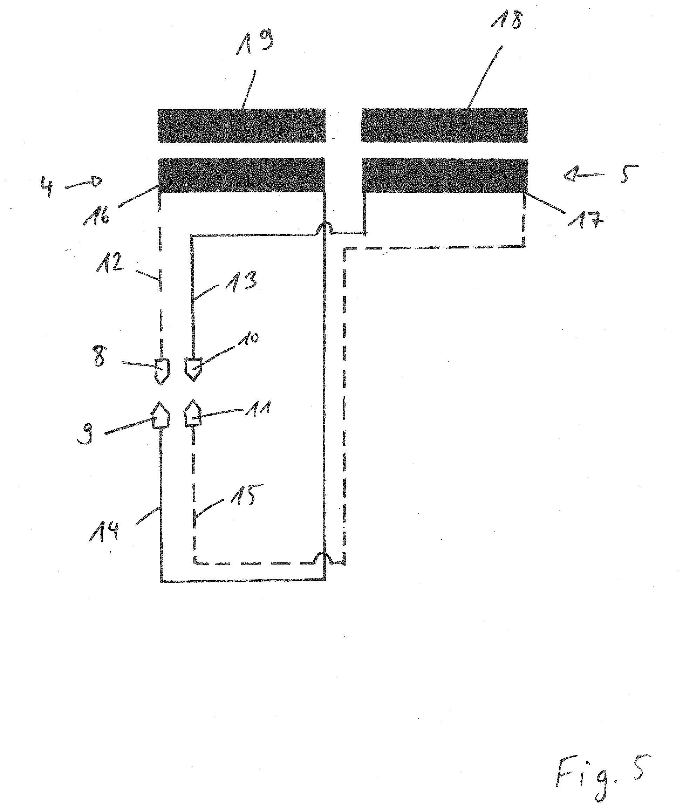

Figur 5 zeigt eine zweite Variante in Abweichung von der Variante gemäß Figur 4. Bei dieser ist vorgesehen, dass beide Schweißstromquellen 4, 5, das heißt beide Transformatoren, jeweils über eine eigene Primärspule 18, 19 verfügen. Beide Primärspulen 18, 19 werden wiederum durch eine oder mehrere nicht weiter dargestellte Stromquellen erregt.

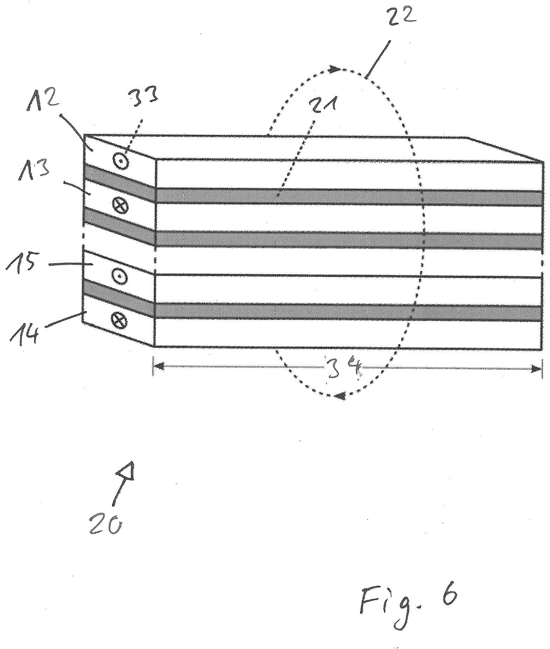

Figur 6 zeigt schließlich ein Beispiel eines Verbunds 20 einer Vielzahl von Stromleitungen 12, 13, 14, 15. Diese sind vorliegend als im Querschnitt rechteckförmige Stromschienen ausgebildet. Die Stromleitungen 12 bis 15 sind jeweils durch einen Isolator 21 elektrisch voneinander getrennt. Der gesamte Verbund 20 ist hierbei luftspaltfrei ausgebildet, was einer weiteren Verringerung der entstehenden Magnetfelder 22 sowie einer Senkung der Induktivität über die gesamte Länge 34 der Stromleitungen 12 bis 15 zu Gute kommt. Maßgeblich beruhen diese Effekte jedoch auf der zuvor bereits thematisierten Neutralisation durch benachbarte Anordnung gegenpoliger und im Querschnitt rechteckförmiger Stromleitungen 12 bis 15. Dies bedeutet, dass die Stromleitungen 12 bis 15 derart an entsprechende Schweißstromquellen angeschlossen sind, dass sich die Stromrichtungen 33 jeweils benachbarter Stromleitungen 12 bis 15 voneinander unterscheiden.

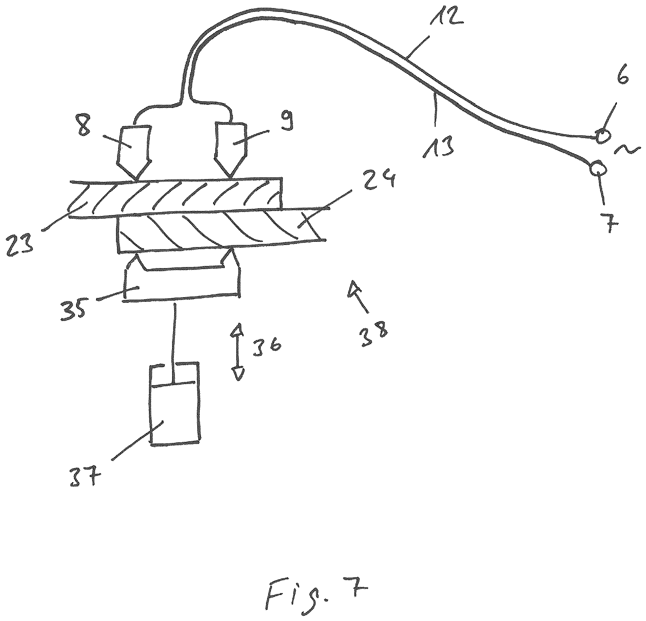

Figur 7 zeigt ein weiteres Ausführungsbeispiel einer Widerstandsschweißvorrichtung 38 gemäß der Erfindung. Diese Widerstandsschweißvorrichtung 38 zeichnet sich dadurch aus, dass ausschließlich zwei Schweißelektroden 8, 9 vorgesehen sind. Der Verbund der Stromleitungen 12,13 ist dennoch besonders ausgeprägt, da die beiden Schweißelektroden 8,9 beide auf einer Seite der Schweißstelle angeordnet sind, d.h. vorliegend oberhalb des Bauteils 23. Der Schweißvorgang wird durch einen Kurzschlussteller 35 unterstützt. Hierbei handelt es sich um ein elektrisch leitfähiges Bauteil mit einem geringen elektrischen Widerstand. Der Kurzschlussteller 35 kann in Bewegungsrichtung 36 durch einen Antrieb 37 verfahren werden. Vor einem Schweißvorgang wird der Kurzschlussteller 35 von unten gegen das Bauteil 24 gedrückt. Der Kurzschlussteller 35 weist zwei Kontaktpunkte auf, welche zumindest in etwa den gleichen Abstand wie die beiden Schweißelektroden 8,9 aufweisen. Somit liegen jeweils ein Kontaktpunkt einer Schweißelektrode 8,9 und ein Kontaktpunkt des Kurzschlusstellers 35 zumindest in etwa auf einer rechtwinkligen Linie durch die Bauteile 23, 24. Wird die Widerstandsschweißvorrichtung 38 nun betrieben, fließt der Strom beispielsweise von der Schweißelektrode 8 durch die Bauteile 23, 24 und anschließend durch den linken Kontaktpunkt des Kurzschlusstellers 35 in denselben. Der Strom verlässt den Kurzschlussteller 35 durch den rechten Kontaktpunkt und fließt durch die Bauteile 24,23 in die zweite Schweißelektrode 9. Im Ergebnis kann somit eine Widerstandsschweißvorrichtung 38 erreicht werden, welche über lediglich zwei Schweißelektroden 8,9 verfügt, bei denen aber dennoch die Stromleitungen 12,13 in einem äußerst engen Verbund bis kurz vor einer Verzweigung zu den Anschlussstellen an den Schweißelektroden 8,9 geführt werden können.

**Bezugszeichenliste**

| | | | |
|---|---|---|---|
| 1 | Widerstandsschweißvorrichtung | 18 | Primärspule |
| 2 | Schweißelektrodenpaar | 19 | Primärspule |
| 3 | Schweißelektrodenpaar | 20 | Verbund |
| 4 | Schweißstromquelle | 21 | Isolator |
| 5 | Schweißstromquelle | 22 | Magnetfeld |
| 6 | Pol | 23 | Bauteil |
| 7 | Pol | 24 | Bauteil |
| 8 | Schweißelektrode | 25 | Widerstandsschweißvorrichtung |
| 9 | Schweißelektrode | 26 | Widerstandsschweißvorrichtung |
| 10 | Schweißelektrode | 27 | Stromleitung |
| 11 | Schweißelektrode | 28 | Stromleitung |
| 12 | Stromleitung | 29 | Magnetfeld |
| 13 | Stromleitung | 30 | Magnetfeld |
| 14 | Stromleitung | 31 | Stromfluss |
| 15 | Stromleitung | 32 | Stromfluss |
| 16 | Sekundärspule | 33 | Stromrichtung |
| 17 | Sekundärspule | 34 | Länge |
| 35 | Kurzschlussteller | | |
| 36 | Bewegungsrichtung | | |
| 37 | Antrieb | | |
| 38 | Widerstandsschweißvorrichtung | | |

## Patentansprüche

1. Widerstandsschweißvorrichtung (1), mit einem Schweißelektrodenpaar (2, 3), einer Schweißstromquelle (4, 5) und zwei Stromleitungen (12, 13, 14, 15), wobei die Schweißstromquelle (4, 5) zwei Pole (6, 7) unterschiedlicher Polarität aufweist, wobei das Schweißelektrodenpaar (2, 3) zwei eine Schweißstelle bildende Schweißelektroden (8, 9, 10, 11) aufweist, wobei jeweils eine der Schweißelektroden (8, 9, 10, 11) mittels einer der Stromleitungen (12, 13, 14, 15) an einen Pol (6, 7) der Schweißstromquelle (4, 5) elektrisch angeschlossen ist, **dadurch gekennzeichnet, dass** die Stromleitungen (12, 13, 14, 15) im Querschnitt rechteckig ausgebildet sind, und dass die Stromleitungen (12, 13, 14, 15) in einem Verbund (20) von der Schweißstromquelle (4, 5) zu den Schweißelektroden (8, 9, 10, 11) geführt sind und dass eine Verzweigung der beiden Stromleitungen (12, 13, 14, 15) zu den beiden Schweißelektroden (8, 9, 10, 11) erst unmittelbar im Bereich von Anschlüssen der Stromleitungen (12, 13, 14, 15) an die Schweißelektroden (8, 9, 10, 11) erfolgt.

2. Widerstandsschweißvorrichtung (1) nach Anspruch 1, **dadurch gekennzeichnet, dass** die Schweißstromquell (4, 5) Wechselstrom mit einer Frequenz von 1000 Hz, vorzugsweise mehr als 1000 Hz bereitstellt.

3. Widerstandsschweißvorrichtung (1) nach einem der vorangehenden Ansprüche, **dadurch gekennzeichnet, dass** die Stromleitungen (12, 13, 14, 15) in einem Verbund (20) luftspaltlos unter Zwischenordnung eines Isolators (21) geführt sind.

4. Widerstandsschweißvorrichtung (1) nach einem der vorangehenden Ansprüche, **gekennzeichnet durch** zumindest zwei Schweißelektrodenpaare (2, 3), zumindest zwei Schweißstromquellen (4, 5) und zumindest vier Stromleitungen (12, 13, 14, 15), wobei jede Schweißstromquelle (4, 5) zwei Pole (6, 7) unterschiedlicher Polarität aufweist, wobei jedes Schweißelektrodenpaar (2, 3) zwei eine Schweißstelle bildende Schweißelektroden (8, 9, 10, 11) aufweist, wobei jeweils eine der Schweißelektroden (8, 9, 10, 11) mittels einer der Stromleitungen (12, 13, 14, 15) an einen Pol (6, 7) einer der Schweißstromquellen (4, 5) elektrisch angeschlossen ist, wobei alle Stromleitungen (12, 13, 14, 15) im Querschnitt rechteckig ausgebildet sind, und wobei alle Stromleitungen (12, 13, 14, 15) nach Anschlusspolarität abwechselnd in einem Verbund (20) von der Schweißstromquelle (4, 5) zu den Schweißelektroden (8, 9, 10, 11) geführt sind.

5. Widerstandsschweißvorrichtung (1) nach Anspruch 4, **dadurch gekennzeichnet, dass** jeweils zwei benachbarte, auf der gleichen Seite einer Schweißstelle angeordnete Schweißelektroden (8, 9, 10, 11) voneinander beabstandet sind.

6. Widerstandsschweißvorrichtung (1) nach einem der vorangehenden Ansprüche 4 bis 5, **dadurch gekennzeichnet, dass** jeweils zwei benachbarte, auf der gleichen Seite einer Schweißstelle angeordnete Schweißelektroden (8, 9, 10, 11) gegenpolig an die Schweißstromquellen (4, 5) angeschlossen sind.

7. Widerstandsschweißvorrichtung (1) nach einem der vorangehenden Ansprüche 4 bis 6, **dadurch gekennzeichnet, dass** jede Schweißstromquelle (4, 5) jeweils durch eine Sekundärspule (16, 17) eines Transformators gebildet ist.

8. Widerstandsschweißvorrichtung (1) nach Anspruch 7, **dadurch gekennzeichnet, dass** alle Sekundärspulen (16, 17) eine gemeinsame Primärspule (18) aufweisen.

9. Widerstandsschweißvorrichtung (1) nach Anspruch 7, **dadurch gekennzeichnet, dass** jede Sekundärspule (16, 17) eine eigene Primärspule (18, 19) aufweist.

10. Widerstandsschweißvorrichtung (1) nach einem der vorangehenden Ansprüche 4 bis 9, **dadurch gekennzeichnet, dass** jeweils Schweißelektroden (8, 9, 10, 11) gleicher Anschlusspolarität elektrisch miteinander verbunden sind.

11. Widerstandsschweißvorrichtung (1) nach einem der vorangehenden Ansprüche 4 bis 10, **dadurch gekennzeichnet, dass** die Schweißstromquellen (4, 5) synchronisiert betrieben sind.

12. Widerstandsschweißvorrichtung (1) nach einem der vorangehenden Ansprüche, **dadurch gekennzeichnet, dass** die Stromleitungen (12, 13, 14, 15) zumindest bereichsweise als Stromschienen oder Strombänder ausgebildet sind.

## Claims

1. A resistance welding device (1) comprising a pair of welding electrodes (2, 3), a welding power source (4, 5) and two power lines (12, 13, 14, 15), wherein the welding power source (4, 5) comprises two poles (6, 7) having a different polarity, wherein the pair of welding electrodes (2, 3) comprises two welding electrodes (8, 9, 10, 11) which form a welding point, wherein each one of the welding electrodes (8, 9, 10, 11) is electrically connected to one pole (6, 7) of the welding power source (4, 5) by means of one of the power lines (12, 13, 14, 15), **characterized in that** the cross section of the power lines (12, 13, 14, 15) is rectangular and that the power lines (12, 13, 14, 15) are guided in a group (20) from the welding power source (4, 5) to the welding electrodes (8, 9, 10, 11) and that a branching of the two power lines (12, 13, 14, 15) towards the two welding electrodes (8, 9, 10, 11) is only realized directly in the area of connections of the power lines (12, 13, 14, 15) to the welding electrodes (8, 9, 10,11).

2. A resistance welding device (1) according to claim 1, **characterized in that** the welding power source (4, 5) provides an alternating current having a frequency of 1000 Hz, preferably more than 1000 Hz.

3. A resistance welding device (1) according to one of the preceding claims, **characterized in that** the power lines (12, 13, 14, 15) are guided in a group (20) without an air gap with interposition of an isolator (21).

4. A resistance welding device (1) according to one of the preceding claims, **characterized by** at least two pairs of welding electrodes (2, 3), at least two welding power sources (4, 5) and at least four power lines (12, 13, 14, 15), wherein each welding power source (4, 5) comprises two poles (6, 7) having a different polarity, wherein each pair of welding electrodes (2, 3) comprises two welding electrodes (8, 9, 10, 11) which form a welding point, wherein respectively one of the welding electrodes (8, 9, 10, 11) is electrically connected to one pole (6, 7) of one of the welding power sources (4, 5) by means of one of the power lines (12, 13, 14, 15), wherein the cross sections of all power lines (12, 13, 14, 15) are rectangular, and wherein all the power lines (12, 13, 14, 15) are guided in an alternating manner depending on the connection polarity in a group (20) from the welding power source (4, 5) to the welding electrodes (8, 9, 10, 11).

5. A resistance welding device (1) according to claim 4, **characterized in that** respectively two adjacent welding electrodes (8, 9, 10, 11) which are arranged on the same side of a welding point are spaced from each other.

6. A resistance welding device (1) according to one of the preceding claims 4 through 5, **characterized in that** respectively two adjacent welding electrodes (8, 9, 10, 11) which are arranged on the same side of a welding point are connected to the welding power sources (4, 5) in an opposite poled manner.

7. A resistance welding device (1) according to one of the preceding claims 4 through 6, **characterized in that** each welding power source (4, 5) is respectively formed by a secondary coil (16, 17) of a transformer.

8. A resistance welding device (1) according to claim 7, **characterized in that** all secondary coils (16, 17) comprise a common primary coil (18).

9. A resistance welding device (1) according to claim 7, **characterized in that** each secondary coil (16, 17) comprises an own primary coil (18, 19).

10. A resistance welding device (1) according to one of the preceding claims 4 through 9, **characterized in that** welding electrodes (8, 9, 10, 11) of the same connection polarity are respectively connected to each other electrically.

11. A resistance welding device (1) according to one of the preceding claims 4 through 10, **characterized in that** the welding power sources (4, 5) are operated in a synchronized manner.

12. A resistance welding device (1) according to one of the preceding claims, **characterized in that** the power lines (12, 13, 14, 15), in certain areas at least, are designed as power rails or current straps.

## Revendications

1. Dispositif de soudage par résistance (1), comprenant une paire d'électrodes de soudage (2, 3), une source de courant de soudage (4, 5) et deux lignes électriques (12, 13, 14, 15), la source de courant de soudage (4, 5) comprenant deux pôles (6, 7) ayant une polarité différente, la paire d'électrodes de soudage (2, 3) comprenant deux électrodes de soudage (8, 9, 10, 11), qui forment un point de soudage, respectivement une des électrodes de soudage (8, 9, 10, 11) étant électriquement raccordée à un pôle (6, 7) de la source de courant de soudage (4, 5) par moyen d'une des lignes électriques (12, 13, 14, 15), **caractérisé en ce que** la section transversale des lignes électriques (12, 13, 14, 15) est rectangulaire, et que les lignes électriques (12, 13, 14, 15) sont guidées dans un groupement (20) à partir de la source de courant de soudage (4, 5) aux électrodes de soudage (8, 9, 10, 11), et qu'une ramification des deux lignes électriques (12, 13, 14, 15) vers les deux électrodes de soudage (8, 9, 10, 11) ne se fait que immédiatement dans la zone de raccords des lignes électriques (12, 13, 14, 15) aux électrodes de soudage (8, 9, 10, 11).

2. Dispositif de soudage par résistance (1) selon la revendication 1, **caractérisé en ce que** la source de courant de soudage (4, 5) fournit du courant alternatif ayant une fréquence de 1000 Hz, de préférence de plus de 1000 Hz.

3. Dispositif de soudage par résistance (1) selon l'une des revendications précédentes, **caractérisé en ce que** les lignes électriques (12, 13, 14, 15) sont guidées dans un groupement (20) sans fente d'air avec l'interposition d'un isolateur (21).

4. Dispositif de soudage par résistance (1) selon l'une des revendications précédentes, **caractérisé par** au moins deux paires d'électrodes de soudage (2, 3), au moins deux sources de courant de soudage (4, 5) et au moins quatre lignes électriques (12, 13, 14, 15), chaque source de courant de soudage (4, 5) comprenant deux pôles (6, 7) ayant une polarité différente, chaque paire d'électrodes de soudage (2, 3) comprenant deux électrodes de soudage (8, 9, 10, 11), qui forment un point de soudage, respectivement une des électrodes de soudage (8, 9, 10, 11) étant électriquement raccordée à un pôle (6, 7) d'une des sources de courant de soudage (4, 5) par moyen d'une des lignes électriques (12, 13, 14, 15), la section transversale de tous les lignes électriques (12, 13, 14, 15) étant rectangulaire, et tous les lignes électriques (12, 13, 14, 15) étant guidées de manière alternante selon la polarité de raccordement dans un groupement (20) à partir de la source de courant de soudage (4, 5) aux électrodes de soudage (8, 9, 10, 11).

5. Dispositif de soudage par résistance (1) selon la revendication 4, **caractérisé en ce que** respectivement deux électrodes de soudage (8, 9, 10, 11) adjacentes et disposées sur le même côté d'un point de soudage sont espacées l'une de l'autre.

6. Dispositif de soudage par résistance (1) selon l'une des revendications précédentes 4 à 5, **caractérisé en ce que** respectivement deux électrodes de soudage (8, 9, 10, 11) adjacentes et disposées sur le même côté d'un point de soudage sont raccordées aux pôles ayant une polarité opposée des sources de courant de soudage (4, 5).

7. Dispositif de soudage par résistance (1) selon l'une des revendications précédentes 4 à 6, **caractérisé en ce que** chaque source de courant de soudage (4, 5) est respectivement formée par une bobine secondaire (16, 17) d'un transformateur.

8. Dispositif de soudage par résistance (1) selon la revendication 7, **caractérisé en ce que** toutes les bobines secondaires (16, 17) comprennent une bobine primaire (18) commune.

9. Dispositif de soudage par résistance (1) selon la revendication 7, **caractérisé en ce que** chaque bobine secondaire (16, 17) comprend sa propre bobine primaire (18, 19).

10. Dispositif de soudage par résistance (1) selon l'une des revendications précédentes 4 à 9, **caractérisé en ce que** des électrodes de soudage (8, 9, 10, 11) ayant la même polarité de raccordement sont respectivement reliées de manière électrique l'une à l'autre.

11. Dispositif de soudage par résistance (1) selon l'une des revendications précédentes 4 à 10, **caractérisé en ce que** les sources de courant de soudage (4, 5) fonctionnent de manière synchronisée.

12. Dispositif de soudage par résistance (1) selon l'une des revendications précédentes, **caractérisé en ce que** les lignes électriques (12, 13, 14, 15) sont configurées, au moins par zones, comme des rails conducteurs ou des tresses isolées.
